# EUROPÄISCHE PATENTSCHRIFT

(11) **EP 3 808 577 B1**
(45) Veröffentlichungstag und Bekanntmachung des Hinweises auf die Patenterteilung: **22.03.2023**
(21) Anmeldenummer: 20196704.9
(22) Anmeldetag: 17.09.2020
(51) Int. Cl.: B60C 19/00, B60C 15/06, H01Q 1/22, H01Q 1/36

(54) **REIFEN**
TYRE
PNEUMATIQUE

(30) Priorität: 17.10.2019 DE 102019215986
(43) Veröffentlichungstag der Anmeldung: 21.04.2021
(73) Patentinhaber: Continental Reifen Deutschland GmbH, 30165 Hannover (DE)
(72) Erfinder: Ehmke, Tobias, 30419 Hannover (DE); Belobrad, Juraj, 30419 Hannover (DE); Mosko, Martin, 30419 Hannover (DE); Kurz, Martin, 30419 Hannover (DE); Buchholz, Arne, 30419 Hannover (DE); Schroeder, Carola, 30419 Hannover (DE)
(74) Vertreter: Continental Corporation

(56) Entgegenhaltungen:
- EP-A1- 0 505 905
- EP-A1- 3 632 708
- DE-A1-102018 200 103
- JP-A- 2000 108 619
- US-A- 4 911 217
- US-B1- 6 192 951

## Beschreibung

Die Erfindung betrifft einen Reifen.

Die Erfindung geht aus von einem Reifen. Dabei ist der Reifen um eine Rotationsachse in in eine Umlaufrichtung rotierbar. Der Reifen weist einen Wulstbereich, einen Wulstkern, einen Apex und eine elektromagnetische Sende- und Empfangsvorrichtung auf. Der Wulstkern und der Apex sind aneinander angeordnet. Die elektromagnetische Sende- und Empfangsvorrichtung weist eine Speicherkomponente und mindestens eine Antennenkomponente auf.

Die mindestens eine Antennenkomponente ist mit der Speicherkomponente verbunden. Dies bedeutet, dass zwischen der mindestens einen Antennenkomponente und der Speicherkomponente ein Kontakt hergestellt ist. Bei diesem Kontakt handelt es sich insbesondere um einen elektrischen oder elektromagnetischen Kontakt. Die mindestens eine Antennenkomponente erstreckt sich entsprechend sämtlicher Ausführungsformen der Erfindung insbesondere in Umlaufrichtung des Reifens.

Bei der elektromagnetischen Sende- und Empfangsvorrichtung handelt es sich insbesondere um eine RFID-Vorrichtung. RFID steht für Radio Frequency Identification und bedeutet Identifizierung mit Hilfe elektromagnetischer Wellen. Elektromagnetisch bedeutet elektromagnetisch wirkend. Dies bedeutet, dass die elektromagnetische Sende- und Empfangseinheit eingerichtet ist, Signale mittels elektromagnetischer Wellen zu senden und zu empfangen.

Aus dem Stand der Technik sind Reifen bekannt, wobei die Reifen eine elektromagnetische Sende- und Empfangsvorrichtung aufweisen. Auf der Speicherkomponente der elektromagnetischen Sende- und Empfangsvorrichtung sind beispielsweise Informationen über den Reifen gespeichert. Beispielsweise wird in der EP2223814B1 ein Reifen mit einer elektromagnetischen Sende- und Empfangsvorrichtung offenbart.

In der EP 3 632 708, in der EP 0 505 905 und in der US 4 ,911,217 werden Reifen offenbart, wobei die Reifen Rotationsachsen aufweisen, um die die Reifen rotierbar sind, und wobei die Reifen Wulstkerne und einen Apex aufweisen, wobei die Reifen elektromagnetische Sende- und Empfangsvorrichtungen aufweisen, wobei die elektromagnetischen Sende- und Empfangsvorrichtungen eine Speicherkomponente und mindestens eine Antennenkomponente aufweisen, wobei die Speicherkomponenten vollständig von dem Apex umgeben sind.

Bei den aus dem Stand der Technik bekannten Reifen könnte ein Einsatz einer elektromagnetischen Sende- und Empfangsvorrichtung nicht optimal ausgestaltet sein. Insbesondere könnte es erforderlich sein, die elektromagnetische Sende- und Empfangsvorrichtung für den Einsatz innerhalb eines Reifens derart vorzubereiten, dass die elektromagnetische Sende- und Empfangsvorrichtung und insbesondere eine Speicherkomponente der elektromagnetischen Sende- und Empfangsvorrichtung mit einer Kautschukbeschichtung versehen werden muss. Dieses Versehen der elektromagnetischen Sende- und Empfangsvorrichtung und insbesondere der Speicherkomponente mit einer Kautschukschicht geht mit einem höheren technischen Aufwand und Kosten einher.

Der Erfindung liegt daher die Aufgabe zugrunde, einen Reifen bereitzustellen, bei dem der Aufwand des Einbringens und Anordnens einer elektromagnetischen Sende- und Empfangsvorrichtung innerhalb eines Reifens vereinfacht wird.

Gelöst wird die erfindungsgemäße Aufgabe dadurch, dass die Speicherkomponente vollständig von dem Apex umgeben ist.

Durch den erfindungsgemäßen Umstand, wonach die Speicherkomponente vollständig von dem Apex umgeben ist, ist die Speicherkomponente vollständig von einem solchen Kautschuk umgeben, der weitestgehend gleiche physikalische und chemische Eigenschaften aufweist. Ein weiteres Versehen der elektromagnetischen Sende- und Empfangsvorrichtung mit einer Kautschukschicht ist dann nicht mehr erforderlich.

Somit wird ein verbesserter Reifen bereitgestellt.

Bei dem Reifen handelt es sich insbesondere um einen PKW-Reifen, um einen LKW-Reifen oder um einen Zweirad-Reifen.

Weitere vorteilhafte Ausgestaltungsformen der vorliegenden Erfindung sind Gegenstand der Unteransprüche.

Gemäß einer vorzugsweisen Ausgestaltungsform der vorliegenden Erfindung ist die mindestens eine Antennenkomponente als helixförmige Antennenkomponente ausgebildet. Die Zylinderachse des geometrischen Zylinders, um dessen Mantel herum sich die Helix der Helixform der mindestens einen Antennenkomponente windet, erstreckt sich insbesondere gemäß sämtlicher Ausführungsformen der Erfindung in Umlaufrichtung des Reifens.

Durch den erfindungsgemäßen Umstand, wonach die mindestens eine Antennenkomponente als helixförmige Antennenkomponente ausgebildet ist, kann ein ausreichend breitbandiges Sende- und Empfangsvermögen der mindestens einen Antennenkomponente sichergestellt werden.

Gemäß der vorliegenden Erfindung ist der Apex aus einer ersten Apexkomponente und aus einer zweiten Apexkomponente ausgebildet. Dabei liegen die erste Apexkomponente und die zweite Apexkomponente aneinander an. Die erste Apexkomponente liegt räumlich näher zu dem Wulstkern und weist insbesondere eine größere Härte auf als die zweite Apexkomponente. Die Speicherkomponente ist zwischen der ersten Apexkomponente und der zweiten Apexkomponente angeordnet.

Durch den erfindungsgemäßen Umstand, wonach der Apex aus einer ersten Apexkomponente und aus einer zweiten Apexkomponente ausgebildet ist, wobei die erste Apexkomponente und die zweite Apexkomponente aneinander anliegen, wobei die erste Apexkomponente räumlich näher zu dem Wulstkern liegt und insbesondere eine größere Härte aufweist als die zweite Apexkomponente, und wobei die mindestens eine Speicherkomponente zwischen der ersten Apexkomponente und der zweiten Apexkomponente angeordnet ist, wird die Speicherkomponente in einem solchen Bereich des Reifens angeordnet, der im Vergleich zu anderen Bereichen des Reifens eine höhere Steifigkeit aufweist. Dadurch erfährt die Speicherkomponente weniger dynamische Kräfte, als es der Fall sein könnte, wenn die Speicherkomponente in einem anderen Bereich des Reifens angeordnet wäre.

Gemäß der vorliegenden Erfindung bilden die erste Apexkomponente und die zweite Apexkomponente in einem Bereich, in dem sie aneinander anliegen, einen Grenzbereich aus. Dabei erstreckt sich der Grenzbereich über einen Erstreckungsbereich. Der Erstreckungsbereich weist eine Ausdehnung rechtwinklig zu der Rotationsachse auf. Dabei ist die Speicherkomponente derart in dem Grenzbereich angeordnet, dass die Speicherkomponente in einem räumlichen Drittel des Erstreckungsbereichs liegt, das von der Rotationsachse am weitesten entfernt liegt.

Durch den erfindungsgemäßen Umstand, wonach die erste Apexkomponente und die zweite Apexkomponente in einem Bereich, in dem sie aneinander anliegen, einen Grenzbereich ausbilden, wobei sich der Grenzbereich über einen Erstreckungsbereich erstreckt, wobei der Erstreckungsbereich eine Ausdehnung rechtwinklig zu der Rotationsachse aufweist, wobei die Speicherkomponente derart in den Grenzbereich angeordnet ist, dass die Speicherkomponente in einem räumlichen Drittel des Erstreckungsbereichs liegt, das von der Rotationsachse am weitesten entfernt liegt, wird die Wahrscheinlichkeit eines möglichen elektromagnetischen Abschirmeffektes insbesondere auf die Speicherkomponente durch einen Karkasslagenumschlag weitestgehend minimiert. Hintergrund dieser Minimierung ist, dass die Anordnung in dem räumlichen Drittel des Erstreckungsbereichs, das von der Rotationsachse am weitesten entfernt liegt, einen größtmöglichen Abstand zu der möglicherweise elektromagnetisch abschirmend wirkenden Karkasseinlage sicherstellt.

Gemäß einer nächsten vorzugsweisen Ausgestaltungsform der vorliegenden Erfindung ist die mindestens eine Antennenkomponente zwischen der ersten Apexkomponente und der zweiten Apexkomponente angeordnet.

Durch den erfindungsgemäßen Umstand, wonach die mindestens eine Antennenkomponente zwischen der ersten Apexkomponente und der zweiten Apexkomponente angeordnet ist, wird die mindestens eine Antennenkomponente in einem solchen Bereich des Reifens angeordnet, der im Vergleich zu anderen Bereichen des Reifens eine höhere Steifigkeit aufweist. Dadurch erfährt die mindestens eine Antennenkomponente weniger dynamische Kräfte, als es der Fall sein könnte, wenn die mindestens eine Antennenkomponente in einem anderen Bereich des Reifens angeordnet wäre.

Gemäß einer nächsten vorzugsweisen Ausgestaltungsform der Erfindung ist die mindestens eine Antennenkomponente derart in dem Grenzbereich angeordnet, dass die mindestens eine Antennenkomponente in dem räumlichen Drittel des Erstreckungsbereichs liegt, das von der Rotationsachse am weitesten entfernt liegt.

Durch den erfindungsgemäßen Umstand, wonach die mindestens eine Antennenkomponente derart in dem Grenzbereich angeordnet ist, dass die mindestens eine Antennenkomponente in dem räumlichen Drittel des Erstreckungsbereichs liegt, dass von der Rotationsachse am weitesten entfernt liegt, wird die Möglichkeit einer elektromagnetischen Abschirmung der mindestens einen Antennenkomponente durch den Karkasslagenumschlag weiter vermindert.

Gemäß einer nächsten vorzugsweisen Ausgestaltungsform der vorliegenden Erfindung ist die mindestens eine Antennenkomponente außerhalb des Apex angeordnet und die mindestens eine Antennenkomponente ist über mindestens ein Kontaktelement mit der Speicherkomponente verbunden. Bei dem Kontaktelement handelt es sich insbesondere um ein elektrisch leitfähiges Element.

Durch den erfindungsgemäßen Umstand, wonach die mindestens eine Antennenkomponente außerhalb des Apex angeordnet ist und die mindestens eine Antennenkomponente über mindestens ein Kontaktelement mit der innerhalb des Apex angeordneten Speicherkomponente verbunden ist, wird eine aufwandsgeringere Anbringung der elektromagnetischen Sende- und Empfangsvorrichtung sichergestellt. Gemäß einer nächsten vorzugsweisen Ausgestaltungsform der vorliegenden Erfindung ist die mindestens eine Antennenkomponente in einem Wulstpolster des Reifens oder in einer Seitenwandkomponente des Reifens angeordnet.

Weitere Merkmale, Vorteile und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung eines nicht erfindungsgemäßen Reifens in Radialschnittansicht;
Fig. 2: eine schematische Darstellung eines nicht erfindungsgemäßen Reifens in Radialschnittansicht gemäß einer Ausführungsform;
Fig. 3: eine schematische Darstellung eines nicht erfindungsgemäßen Reifens in Radialschnittansicht gemäß einer weiteren Ausführungsform;
Fig. 4: eine schematische Darstellung eines erfindungsgemäßen Reifens in Radialschnittansicht gemäß einer erfindungsgemäßen Ausführungsform;
Fig. 5: eine schematische Darstellung eines Apex mit einer elektromagnetischen Sende- und Empfangsvorrichutng für einen Reifen.

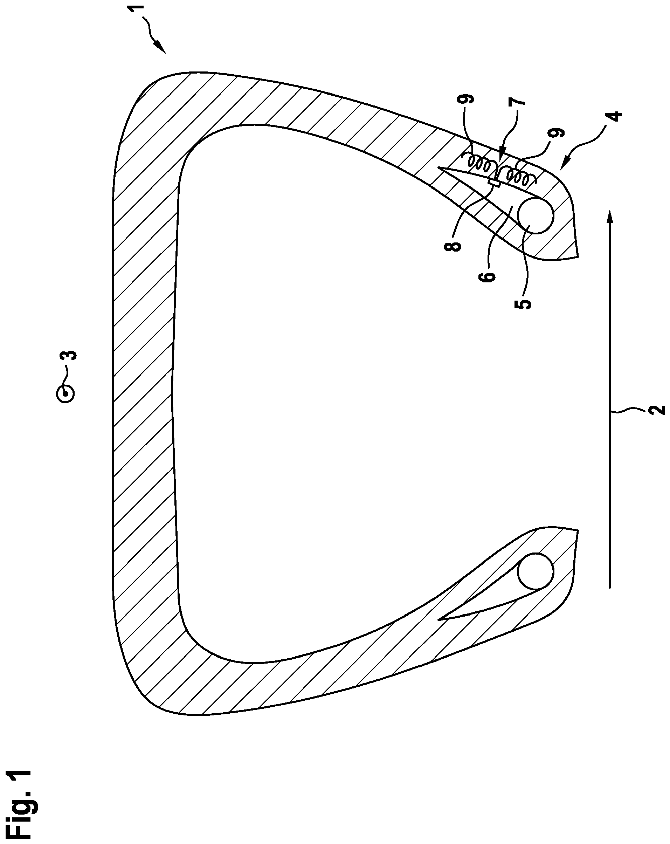

In der Figur 1 ist ein Reifen 1 schematisch in Radialschnittansicht dargestellt. Der Reifen 1 ist um eine Rotationsachse 2 in eine Umlaufrichtung 3 rotierbar. Der Reifen 1 weist einen Wulstbereich 4, einen Wulstkern 5 und einen Apex 6 auf. Der Wulstkern 5 und der Apex 6 sind aneinander angeordnet. Der Reifen 1 weist ferner eine elektromagnetische Sende- und Empfangsvorrichtung 7 auf. Die elektromagnetische Sende- und Empfangsvorrichtung 7 weist eine Speicherkomponente 8 und mindestens eine Antennenkomponente 9 auf. Die Speicherkomponente 8 ist vollständig von dem Apex 6 umgeben.

Insbesondere und gemäß der Darstellung in der Figur 1 ist die mindestens eine Antennenkomponente 9 als helixförmige Antennenkomponente 9 ausgebildet. Darüber hinaus weist die elektromagnetische Sende- und Empfangsvorrichtung 7 gemäß der Darstellung in der Figur 1 zwei helixförmige Antennenkomponenten 9 auf.

Die mindestens eine Antennenkomponente 9 erstreckt sich insbesondere in Umlaufrichtung 3 des Reifens 1.

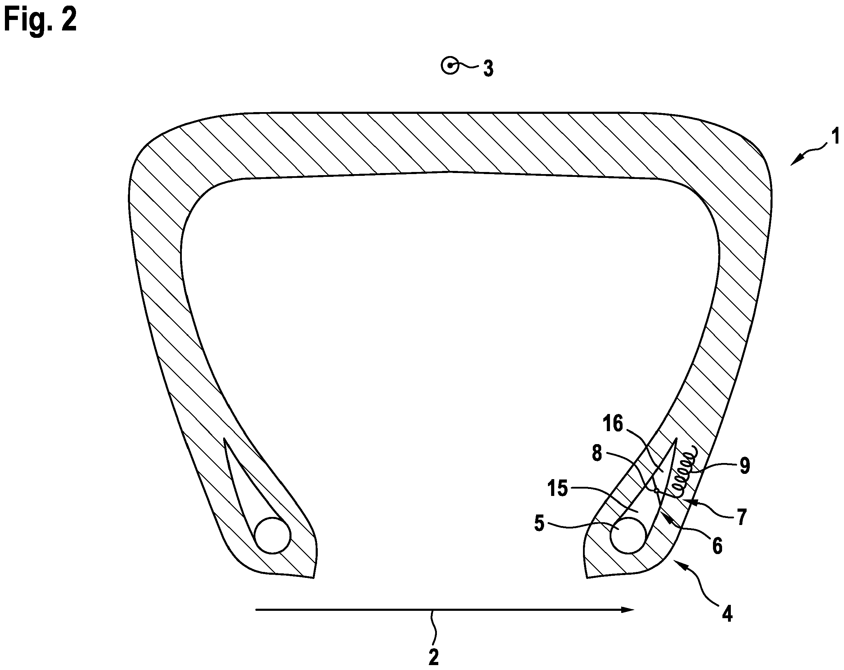

In der Figur 2 ist ein Reifen 1 gemäß einer Ausführungsform schematisch in Radialschnittansicht dargestellt. Gemäß der Darstellung in der Figur 2 ist der Apex 6 aus einer ersten Apexkomponente 15 und aus einer zweiten Apexkomponente 16 ausgebildet. Die erste Apexkomponente 15 und zweite Apexkomponente 16 liegen aneinander an. Dabei liegt die erste Apexkomponente 15 räumlich näher zu dem Wulstkern 5. Die erste Apexkomponente 15 weist insbesondere eine größere Härte auf als die zweite Apexkomponente 16. Die Speicherkomponente 8 ist zwischen der ersten Apexkomponente 15 und der zweiten Apexkomponente 16 angeordnet. Die mindestens eine Antennenkomponente 9 erstreckt sich insbesondere in Umlaufrichtung 3 des Reifens 1.

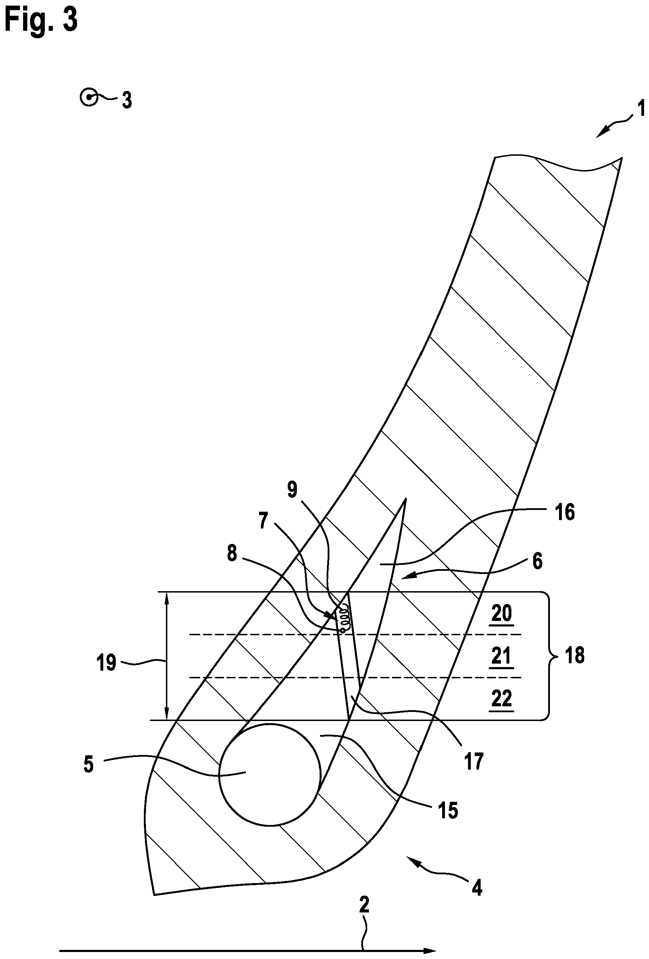

In der Figur 3 ist ein Reifen 1 gemäß einer weiteren Ausführungsform schematisch in Radialschnittansicht dargestellt. Gemäß der Darstellung in der Figur 3 liegen die erste Apexkomponente 15 und die zweite Apexkomponente 16 in einem Bereich aneinander an und bilden einen Grenzbereich 17 aus. Der Grenzbereich 17 erstreckt sich über einen Erstreckungsbereich 18. Dabei weist der Erstreckungsbereich 18 eine Ausdehnung 19 rechtwinklig zu der Rotationsachse 2 auf. Die Speicherkomponente 8 ist dabei derart in dem Grenzbereich 17 angeordnet, dass die Speicherkomponente 8 in einem räumlichen Drittel 20 des Erstreckungsbereichs 18 liegt, das von der Rotationsachse 2 am weitesten entfernt liegt. Insbesondere und gemäß der Darstellung in der Figur 3 ist die mindestens eine Antennenkomponente 9 derart in dem Grenzbereich 17 angeordnet, dass die mindestens eine Antennenkomponente 9 in dem räumlichen Drittel 20 des Erstreckungsbereichs 18 liegt. Die anderen Drittel 21 und 22 des Erstreckungsbereichs 18 liegen räumlich näher zu der Rotationsachse 2 als das Drittel 20 des Erstreckungsbereichs 18. Die mindestens eine Antennenkomponente 9 erstreckt sich insbesondere in Umlaufrichtung 3 des Reifens 1.

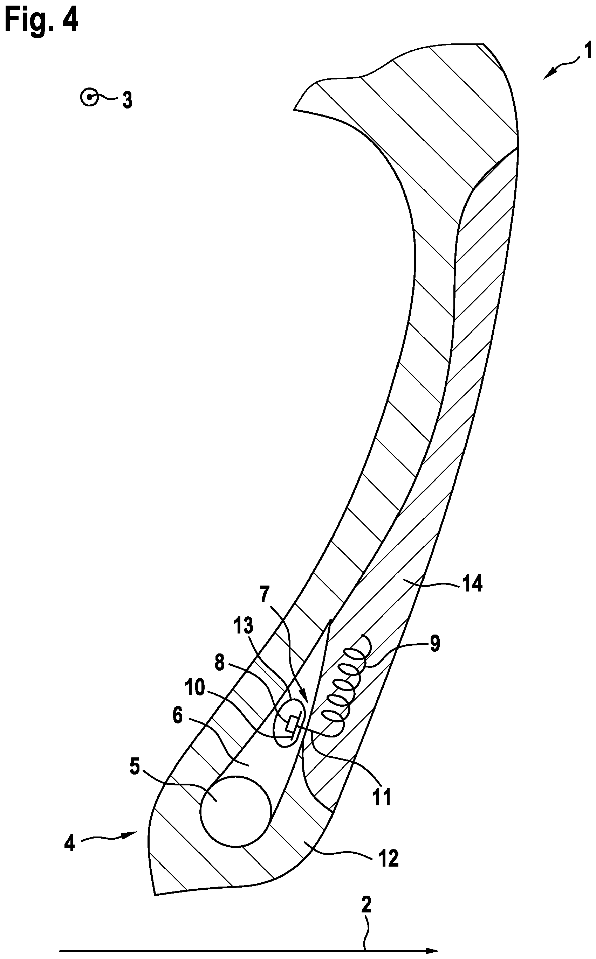

In der Figur 4 ist ein erfindungsgemäßer Reifen 1 gemäß einer erfindungsgemäßen Ausführungsform schematisch in Radialschnittansicht dargestellt. Gemäß der Darstellung in der Figur 4 ist die mindestens eine Antennenkomponente 9 außerhalb des Apex 6 angeordnet. Die mindestens eine Antennenkomponente 9 ist über mindestens ein Kontaktelement 11 mit der Speicherkomponente 8 verbunden. Die mindestens eine Antennenkomponente 9 erstreckt sich insbesondere in Umlaufrichtung 3 des Reifens 1.

Die Speicherkomponente 8 ist auf einer Leiterplatte 10 angeordnet. Die Speicherkomponente 8 und die Leiterplatte 10 sind innerhalb eines Gehäuses 13 angeordnet.

Gemäß der Darstellung in der Figur 4 ist die mindestens eine Antennenkomponente 9 in einer Seitenwandkomponente 14 des Reifens 1 angeordnet. Die mindestens eine Antennenkomponente 9 kann auch in einem Wulstpolster 12 des Reifens 1 angeordnet sein.

Die mindestens eine Antennenkomponente 9 erstreckt sich insbesondere in Umlaufrichtung 3 des Reifens 1.

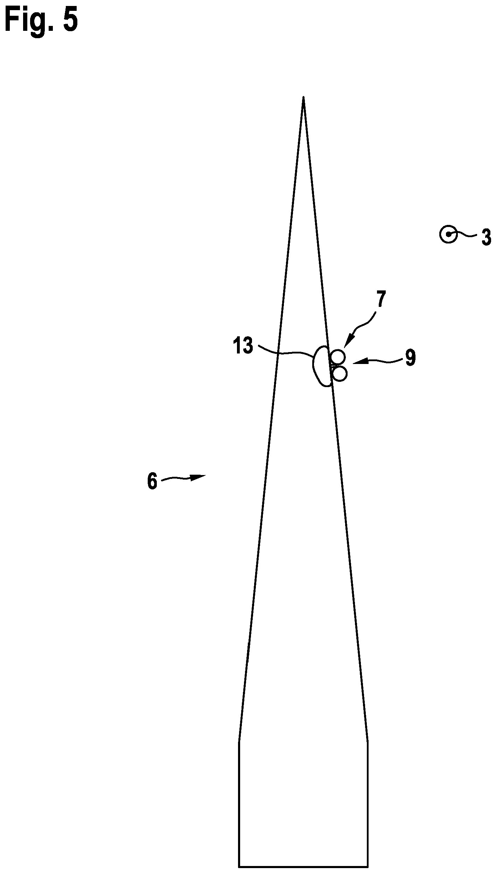

In der Figur 5 ist ein Apex 6 mit einer elektromagnetischen Sende- und Empfangsvorrichtung 7 für einen Reifen 1 schematisch dargestellt. Die mindestens eine Antennenkomponente 9 erstreckt sich insbesondere in Umlaufrichtung 3 des Reifens 1.

### Bezugszeichenliste

- 1: Reifen
- 2: Rotationsachse
- 3: Umlaufrichtung
- 4: Wulstbereich
- 5: Wulstkern
- 6: Apex
- 7: Elektromagnetische Sende- und Empfangsvorrichtung
- 8: Speicherkomponente
- 9: Antennenkomponente
- 10: Leiterplatte
- 11: Kontaktelement
- 12: Wulstpolster
- 13: Gehäuse
- 14: Seitenwandkomponente
- 15: erste Apexkomponente
- 16: zweite Apexkomponente
- 17: Grenzbereich
- 18: Erstreckungsbereich
- 19: Ausdehnung des Erstreckungsbereichs
- 20: Räumliches Drittel des Erstreckungsbereichs, das von der Rotationsachse am weitesten entfernt liegt
- 21: Weiteres Drittel des Erstreckungsbereichs
- 22: Weiteres Drittel des Erstreckungsbereichs

## Patentansprüche

1. Reifen (1), wobei der Reifen (1) um eine Rotationsachse (2) in eine Umlaufrichtung (3) rotierbar ist, aufweisend einen Wulstbereich (4), einen Wulstkern (5), einen Apex (6), wobei der Wulstkern (5) und der Apex (6) aneinander angeordnet sind, und eine elektromagnetische Sende- und Empfangsvorrichtung (7), wobei die elektromagnetische Sende- und Empfangsvorrichtung (7) eine Speicherkomponente (8) und mindestens eine Antennenkomponente (9) aufweist, wobei die Speicherkomponente (8) vollständig von dem Apex (6) umgeben ist, wobei der Apex (6) aus einer ersten Apexkomponente (15) und aus einer zweiten Apexkomponente (16) ausgebildet ist, wobei die erste Apexkomponente (15) und die zweite Apexkomponente (16) aneinander anliegen, wobei die erste Apexkomponente (15) räumlich näher zu dem Wulstkern (5) liegt, und wobei die Speicherkomponente (8) zwischen der ersten Apexkomponente (15) und der zweiten Apexkomponente (16) angeordnet ist,
**dadurch gekennzeichnet,**
**dass** die erste Apexkomponente (15) und die zweite Apexkomponente (16) in einem Bereich, in dem sie aneinander anliegen, einen Grenzbereich (17) ausbilden, wobei sich der Grenzbereich (17) über einen Erstreckungsbereich (18) erstreckt, wobei der Erstreckungsbereich (18) eine Ausdehnung (19) rechtwinklig zu der Rotationsachse (2) aufweist, wobei die Speicherkomponente (8) derart in dem Grenzbereich (17) angeordnet ist, dass die Speicherkomponente (8) in einem räumlichen Drittel (20) des Erstreckungsbereichs (18) liegt, das von der Rotationsachse (2) am weitesten entfernt liegt.

2. Reifen (1) nach Anspruch 1, **dadurch gekennzeichnet, dass** die mindestens eine Antennenkomponente (9) als helixförmige Antennenkomponente (9) ausgebildet ist.

3. Reifen (1) nach einem der vorhergehenden Ansprüche, **dadurch gekennzeichnet, dass** die mindestens eine Antennenkomponente (9) derart in dem Grenzbereich (17) angeordnet ist, dass die mindestens eine Antennenkomponente (9) in dem räumlichen Drittel (20) des Erstreckungsbereichs (18) liegt, das von der Rotationsachse (2) am weitesten entfernt liegt.

4. Reifen (1) nach einem der Ansprüche 1 oder 2, **dadurch gekennzeichnet, dass** die mindestens eine Antennenkomponente (9) außerhalb des Apex (6) angeordnet ist und die mindestens eine Antennenkomponente (9) über ein mindestens ein Kontaktelement (11) mit der Speicherkomponente (8) verbunden ist.

5. Reifen (1) nach dem vorhergehenden Anspruch, **dadurch gekennzeichnet, dass** die mindestens eine Antennenkomponente (9) in einem Wulstpolster (12) des Reifens (1) oder in einer Seitenwandkomponente (14) des Reifens (1) angeordnet ist.

## Claims

1. Tyre (1), wherein the tyre (1) can be rotated about an axis of rotation (2) in a circumferential direction (3), comprising a bead region (4), a bead core (5), an apex (6), wherein the bead core (5) and the apex (6) are arranged on one another, and an electromagnetic transmitting and receiving device (7), wherein the electromagnetic transmitting and receiving device (7) comprises a memory component (8) and at least one antenna component (9), wherein the memory component (8) is completely surrounded by the apex (6), wherein the apex (6) is formed from a first apex component (15) and from a second apex component (16), wherein the first apex component (15) and the second apex component (16) bear against one another, wherein the first apex component (15) is situated spatially closer to the bead core (5), and wherein the memory component (8) is arranged between the first apex component (15) and the second apex component (16),
**characterized**
**in that** the first apex component (15) and the second apex component (16) form a boundary region (17) in a region in which they bear against one another, wherein the boundary region (17) extends over an extension region (18), wherein the extension region (18) has an extent (19) at a right angle to the axis of rotation (2), wherein the memory component (8) is arranged in the boundary region (17) in such a way that the memory component (8) is situated in a spatial third (20) of the extension region (18) that is situated furthest away from the axis of rotation (2).

2. Tyre (1) according to Claim 1, **characterized in that** the at least one antenna component (9) takes the form of a helical antenna component (9).

3. Tyre (1) according to either of the preceding claims, **characterized in that** the at least one antenna component (9) is arranged in the boundary region (17) in such a way that the at least one antenna component (9) is situated in the spatial third (20) of the extension region (18) that is situated furthest away from the axis of rotation (2).

4. Tyre (1) according to either of Claims 1 and 2, **characterized in that** the at least one antenna component (9) is arranged outside of the apex (6), and the at least one antenna component (9) is connected to the memory component (8) via at least one contact element (11).

5. Tyre (1) according to the preceding claim, **characterized in that** the at least one antenna component (9) is arranged in a bead pad (12) of the tyre (1) or in a sidewall component (14) of the tyre (1).

## Revendications

1. Pneu (1), le pneu (1) étant rotatif autour d'un axe de rotation (2) dans une direction circonférentielle (3), présentant une zone de talon (4), une tringle de talon (5), un apex (6), la tringle de talon (5) et l'apex (6) étant agencés l'un contre l'autre, et un dispositif d'émission et de réception électromagnétique (7), le dispositif d'émission et de réception électromagnétique (7) présentant un composant de stockage (8) et au moins un composant d'antenne (9), le composant de stockage (8) étant entièrement entouré par l'apex (6), l'apex (6) étant formé d'un premier composant d'apex (15) et d'un deuxième composant d'apex (16), le premier composant d'apex (15) et le deuxième composant d'apex (16) étant adjacents l'un à l'autre, le premier composant d'apex (15) étant spatialement plus proche de la tringle de talon (5), et le composant de stockage (8) étant agencé entre le premier composant d'apex (15) et le deuxième composant d'apex (16), **caractérisé en ce que**
le premier composant d'apex (15) et le deuxième composant d'apex (16) forment une zone limite (17) dans une zone dans laquelle ils sont adjacents l'un à l'autre, la zone limite (17) s'étendant sur une zone d'extension (18), la zone d'extension (18) présentant une étendue (19) à angle droit de l'axe de rotation (2), le composant de stockage (8) étant agencé dans la zone limite (17) de telle sorte que le composant de stockage (8) se situe dans un tiers spatial (20) de la zone d'extension (18) qui est le plus éloigné de l'axe de rotation (2).

2. Pneu (1) selon la revendication 1, **caractérisé en ce que** l'au moins un composant d'antenne (9) est configuré sous forme de composant d'antenne hélicoïdal (9).

3. Pneu (1) selon l'une quelconque des revendications précédentes, **caractérisé en ce que** l'au moins un composant d'antenne (9) est agencé dans la zone limite (17) de telle sorte que l'au moins un composant d'antenne (9) se situe dans le tiers spatial (20) de la zone d'extension (18) qui est le plus éloigné de l'axe de rotation (2).

4. Pneu (1) selon l'une quelconque des revendications 1 ou 2, **caractérisé en ce que** l'au moins un composant d'antenne (9) est agencé à l'extérieur de l'apex (6) et l'au moins un composant d'antenne (9) est relié au composant de stockage (8) par l'intermédiaire d'au moins un élément de contact (11).

5. Pneu (1) selon la revendication précédente, **caractérisé en ce que** l'au moins un composant d'antenne (9) est agencé dans un rembourrage de talon (12) du pneu (1) ou dans un composant de paroi latérale (14) du pneu (1).
